# EUROPEAN PATENT APPLICATION

(11) **EP 3 407 284 A1**
(43) Date of publication of application: **28.11.2018**
(21) Application number: 17382290.9
(22) Date of filing: 22.05.2017
(51) Int. Cl.: G06Q 30/02

(54) **METHOD AND SYSTEM FOR OFFLINE RENDERING ADS FROM CACHED RESOURCES**

(71) Applicant: Telefonica Digital España, S.L.U., 28013 Madrid (ES)
(72) Inventor: FERNÁNDEZ-VELASCO FERNÁNDEZ, Víctor, 28013 Madrid (ES); MARTÍNEZ GARCÍA, Santiago, 28013 Madrid (ES)
(74) Representative: Herrero & Asociados, S.L.

(57) **Abstract**

Present invention refers to a method and system for rendering an advertisement on a mobile communication device comprising: registering, installing and activating a service worker for managing a certain domain scope; detecting a WiFi connection or an off peak period to provide, by a content delivery network, a set of advertisement assets to a cache of the device; intercepting, by the service worker, an advertisement request from the website; subsequently sending an advertisement request, from the service worker to an ad platform comprising navigation parameters of the user of the mobile device; sending instructions, from the ad platform to the service worker, to render a specific advertisement based on the user's navigation parameters provided; fetching, by the service worker, cached advertising assets based on the instructions provided by the ad platform; and offline rendering the specific advertisement with the fetched advertisement assets.

## Description

### TECHNICAL FIELD OF THE INVENTION

Present invention generally relates to mobile advertising and more specifically to a mobile browser based method and system for the offline rendering of specific ads on the web, based on available resources in the cache, which are previously fetched according to a criteria leveraging optimization of the mobile network operator capacity and publishers' web loading times when rendering the ads.

### BACKGROUND OF THE INVENTION

Nowadays, advertising to mobile devices, such as smartphones and tablets, is becoming more important as it reaches the users in a more efficient way than traditional advertising. Companies serve these kinds of ads through multiple methods depending on how the inventory or ad space was sold, which generally implies multiple calls to ad servers and networks involved in the advertising value chain.
As result, a higher capacity is demanded on the mobile network in order to be able to serve the ads online together with the regular mobile web content, which often leads to network congestion problems.
Network calls finally result in addresses for locating the ad resources, which are fetched and loaded from a different ad server or even a content delivery network (CDN). Due to the high number of calls and the weight of the ad resources fetched, the experience on the mobile web is often affected and load times increased, impacting the customer experience.

Prior art offers some solutions for ad insertion based on cache, for instance the patent application EP 2491525 A1 "Browser cache based ad insertion", which describes an ad caching solution for browsers, where each time a web page is requested, the server sends a script that is cached on the device. Subsequent thereto, an Ad is requested to the Ad Server when the page has been loaded and then, the ad is rendered and displayed according to that cached script. However, this solution is exclusively proposed for the current session, and there is no reuse of information cached over time. Moreover, user's data plan is affected, since there is no control of when/which network connectivity is used for serving the ads and the script to the device.

In the patent application US 20080098420 A1 "Distribution and display of advertising for devices in a network" the device has a cache of ads that can be updated at any time. The device also includes an ad management policy that can be updated by the Ad Server or a network operator, even in real time. When the device has to display an ad, it applies the policy available at that time to select ads in the cache. However, the ad is not customized in real time, as the information for this personalization is sent from the device to the Ad Server and therefore. Moreover, the content of the ads is directly cached, so there is no rendering or adaptation according to personal and real-time parameters. Another problem of this solution is that the updates for the ad management policies and cache of ads in the device are made from the server whenever network connectivity is available, so user's data plan may be affected.

There are other simple solutions referred to ad caching, as the patent application US 20070124662 A1 "Offline click-through ads within internet content". When navigating and accessing the ads, they are stored and cached in the device. So, if no connection is available, the ads will be obtained offline. This solution requires accessing and rendering each of the ads online first, before being able to cache them in the user's device. Patent application US 20110167486 A1 "Client-side ad caching for lower ad serving latency" is considered similar to the previous one, as the device caches the ads previously. When the device has to display one ad, it chooses those that fulfil the requirements to be displayed, according to some previous criteria (time, size, etc.) However, the best possible ad is not selected, since there is an Ad Server specialized in this type of solutions. Moreover, this could have the undesired result of a time gap between the cached information in the device and Ad Server information. Moreover, this document describes that the ads are already predefined and it would not describe any possibility for customization.

For the reasons mentioned before, it would be advantageous to have a flexible solution for rendering the best version of an ad, which in turn would not affect user's data plans and could be customized according to different users and contexts. This would lead to an improvement of telecommunication network congestion problems, which also has a positive impact on customer experience.

### SUMMARY OF THE INVENTION

Present invention solves the aforementioned problems in mobile advertising allowing customers to navigate using their data plan for the content they want and providing them with a better user experience by making use of a service worker to preload advertisement selected assets (it has to be mentioned that the terms ""assets" and "resources" are used interchangeably along this document) in the cache of the mobile communication device. Thus, a first aspect of the present invention refers to a method for rendering specific advertisements on mobile communication devices, comprising:
a) providing a set of advertisement assets on a content delivery network, where the set of advertisement assets is available to be fetched by a service worker;
b) registering, installing and activating the service worker on a certain domain;
c) detecting, by the service worker, a WiFi connection available for the mobile communication device or an off peak period of the telecommunication network serving the mobile communication device;
d) downloading one or more advertisement assets, from the set of advertisement assets of the content delivery network, to the mobile communication device cache;
e) intercepting, by the service worker, an advertisement network request originated by a specific ad tag previously assembled in a domain website visited by a user of the mobile communication device;
f) sending one or more parameters comprising user navigation information from the service worker to an ad platform
g) receiving, by the service worker, instructions to fetch specific advertisement assets to the user from the mobile communication device cache;
h)fetching, by the service worker, specific advertisement assets from those previously downloaded in the mobile device cache, based on the instructions provided by the ad platform;
i) offline rendering of the specific advertisement, based on the specific advertisement assets.

In one embodiment of the invention, it is further considered classifying the advertisement assets, previously provided to the content delivery network, into different groups of users or segments.

Additionally, according to one particular embodiment of the invention, downloading advertisement assets to the mobile communication device cache, further comprising selecting, by the service worker all the advertisement assets classified in a group of users where the user of the mobile communication device belongs.

In one embodiment of the invention, it is considered selecting the advertisement assets to be fetched for the user based on a context given by the one or more parameters comprising user navigation information. Thus, advantageously the specific advertisement rendered will be the most relevant for that user, based on a template.

Optionally, present invention may consider enabling the service worker to detect an off peak period of the telecommunication network serving the mobile device, through the usage of a network capacity application programming interface.

Intercepting the advertisement network request from a publisher's website may comprise the steps of:
- visiting the website, by the user of the mobile communication device;
- downloading an ad tag inserted in the website, by a browser installed on the mobile communication device;
- in response to downloading the ad tag, the advertisement network request occurs;
- once the service worker is registered, installed and activated, intercepting the advertisement network request before being sent to an ad server.

The instructions provided by the ad platform, according to one embodiment of present invention, are part of a response of a server following a decision process based on at least one of the following criteria: availability of reserved ad spaces for premium buyers or real time bidding process for the open ad market, being the response a winning bid.

In one embodiment of present invention, rendering the specific advertisement may comprise templating the specific advertisement on a templating engine of the service worker, combining some of the advertising assets previously stored in the mobile device's cache.

Navigation parameters of a user of the mobile communication device may comprise, at least, one of time, location, type of navigation and profile of the user.

Advertising resources may comprise, at least, one of video assets, image assets software libraries and any other dynamic content.

The instructions sent from the ad platform to the service worker, according to one embodiment of the invention, are provided in a Javascript Object notation (JSON) file. However, many other formats can be used, such as XML or URL.

In addition, one embodiment of present invention comprises inserting the specific advertisement into the website.

A second aspect of the invention refers to a system for rendering a specific advertisement, comprising:
- a mobile communication device configured for browsing through the Internet and accessing to websites, having a cache configured for storing advertisement assets;
- a content delivery network configured for receiving a set of advertisement assets provided by a publisher;
- a service worker configured for:
   ∘ detecting a WiFi connection available for the mobile communication device or an off peak period of a telecommunication network serving the mobile communication device;
   ∘ downloading one or more assets, from the set of advertisement assets of the content delivery network to the mobile communication device cache;
   ∘ intercepting, an advertisement network request originated by a specific ad tag previously assembled in a website visited by a user of the mobile communication device;
   ∘ subsequently sending one or more parameters comprising user navigation information to an ad platform;
   ∘ receiving instructions from the ad platform to fetch specific assets to the user from the mobile communication device cache;
   ∘ fetching specific assets from those previously downloaded in the mobile communication device cache, based on the instructions provided by the ad platform;
   ∘ offline rendering the specific advertisement, based on the specific assets;
- an ad platform configured for, in response to receiving the one or more parameters comprising user navigation information, sending instructions to the service worker, to render a specific advertisement, based on the parameters received.

In one embodiment, present invention further comprises a network capacity application programming interface configured for providing an alert to the service worker when detecting an off peak period of a telecommunication network serving the mobile communication device. Thus, advantageously, the set of resources can be loaded to the cache of the mobile communication device without affecting user's data plan.

Additionally, present invention may consider a templating engine within the service worker, configured for combining software libraries previously stored to render the specific advertisement.

A last aspect of the invention refers to a computer program product comprising computer program code adapted to perform the method of present invention when said program code is executed on a computer, a digital signal processor, a field-programmable gate array, an application-specific integrated circuit, a micro-processor, a micro-controller, or any other form of programmable hardware.

Therefore, present invention involves several advantages, for instance, the cache of the mobile communication device is updated in the background, without affecting the user's data plan or requiring the user to be navigating through the specific web page at the same time. In addition, personalized ads are rendered based on the templating instructions received from the server using only cached resources, so present invention can be considered highly customer friendly.

Moreover, users will enjoy faster browsing speeds as all network and device processing resources can be dedicated to rendering the content they want and, although ads are rendered offline, they are highly dynamic.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a drawing wherein, by way of illustration and not restrictively, the following has been represented:
**Figure 1****.-** shows the structure of one preferred embodiment of present invention.
**Figure 2****.-** shows a flow chart of the process of present invention.
**Figure 3****.-** shows a simple scheme of the process of rendering the ad from cached resources.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

Present invention discloses a method for offline rendering specific ads from cached resources which reduces the pressure on congested cells by maximising usage across the day. Present invention proposes deferring traffic to under-utilised times and so providing a smoother and more balanced usage pattern of network resources. This mobile browser based method and system for the offline rendering of ads on the web, triggers the fetch, update and cache on the mobile browser of all the necessary ad resources from the network when the users' data plan is not affected. The mobile browser will subsequently make use each time of the relevant ad resources from those available in the cache in order to render each specific ad, instead of having to fetch them from the network. Thus, the invention ensures there's no impact on the users' data plans and helps in the optimization of the mobile network operator capacity and the publishers' web loading times when rendering the ads.

The way to achieve this goal is to cache the creative assets in the mobile device, loading them at a time where the mobile device is connected to Wi-Fi or there are low-load conditions on the mobile network (e.g. at night).

Regarding the browser, present invention only requires the interplay of a service worker module activated for connecting with the platform and an Ad Server. Additionally, Service Worker management is already a part of the W3C standard and it is already available for free and off-the-shelf in most browsers.

A service worker is a script that browsers run in the background. It works as a programmable network proxy, so it allows the controlling of how network calls are managed, which is meaningful for functions that do not need a web page or user interaction. Before installing a service worker at a certain domain, the service worker must be registered for the said domain scope. This process will let the browser know where the service worker's script file is located. This may be implemented in JavaScript language JSON or any other language as XML.

In order to register the service worker, a first visit to the website is required, where the first ad is shown directly from the server (given that the service worker is not yet registered/installed). After registering the service worker, the following network calls will be intercepted, so said service worker will manage the cache of the mobile device and be able to load stored resources for rendering the following ads. Therefore, once the creative assets (video, image, templates, etc.) are stored in the cache of the mobile device, each time the user navigates and needs to insert an ad on a page, the ad platform will only send the information necessary to the mobile device. Namely, the information needed to build the customized ad required at the time according to certain context, such as time of day, type of navigation, etc...

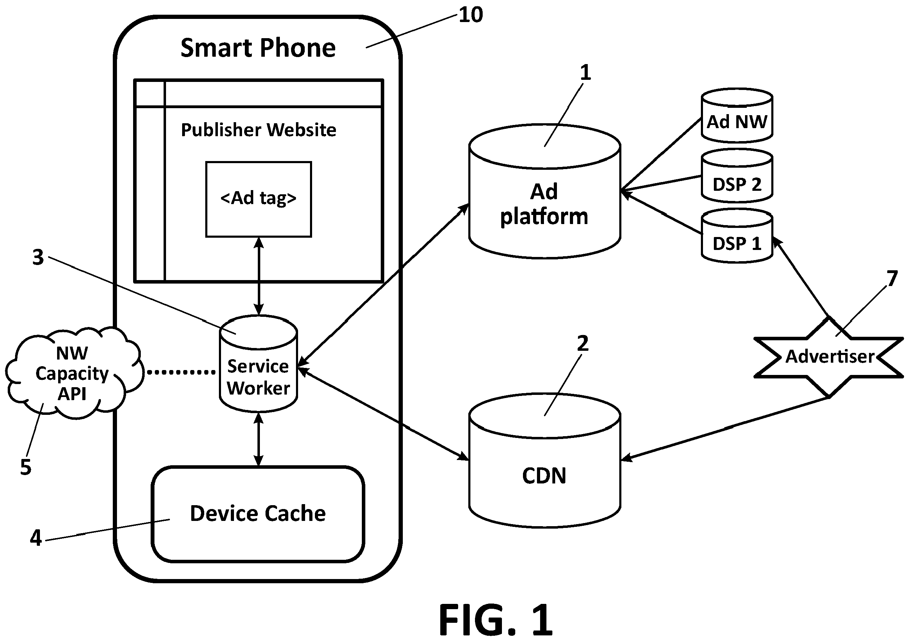

**Figure 1** shows the structure of one preferred embodiment of present invention, where it is assumed that the service worker has been already registered and installed on the mobile device (10) and a first ad has been served. This preferred embodiment comprises:
- an ad platform (1), such as an Axonix ad exchange, an ad server, a selling platform for automated programmatic advertising (supply side platform, SSP) or any other platform with advertising decision ability;
- a specific platform (2) consisting of a content delivery network (CDN), which determines the assets to be applied to each user based on the information received from the ad platform. These assets are those that are loaded into the cache of each mobile device and are controlled by the service worker.

Some functions of the specific platform of this preferred embodiment comprise of determining and classifying the assets into different users or segments; real-time decision about assets to be used based on cookies or query string (parameters of a URL behind a mark question "?") provided by the ad platform; and connecting with advertising asset upload systems within different platforms, which may include buying platforms for automated programmatic advertising (also known as demand side platforms, DSP) and advertising/publisher ad servers, which decide and host advertising assets for advertisers (7) and publishers.
- A service worker (3) consisting of a script acting as a network proxy, which intercepts all network calls in a particular domain or scope. Each time there is a network call to display an ad, the service worker will receive instructions from the ad platform to determine what resources must be loaded from the cache and render the corresponding ad. In case said resources are not available in cache, the service worker requests them from the ad platform.

One of the functionalities of the service worker is to install resources in the cache, leveraging the detection of WiFi or an off peak period in the network. This way, when the user is connected by WiFi or an off peak period in the mobile network is detected, the service worker will load available assets on the cache of the mobile device, namely the assets that the specific platform determines that are applicable to that specific user.
- A device cache (4) for storing data so future requests for that data can be served faster. More important for online advertising is that the assets may be used offline for rendering an ad.
- A network capacity API (5), which is an Application Programming Interface providing some network capacities, for example it may push an alert for an off peak period of the network, so the service worker may trigger the assets downloading process.

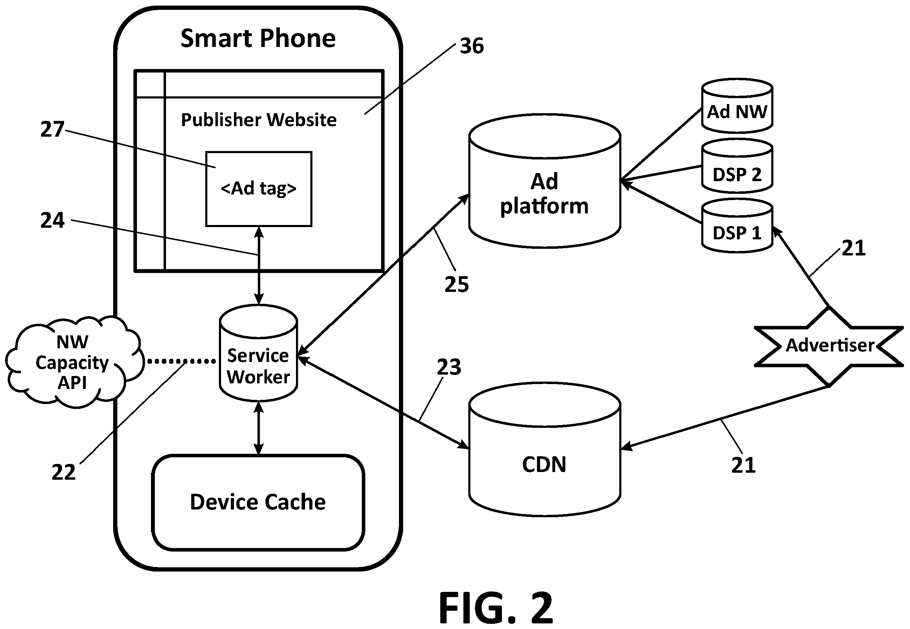

**Figure 2** shows the process of present invention according to a preferred embodiment. The flow chart starts with an advertiser loading (21) creative assets for a campaign into one or more demand side platforms (DSP1, DSP2) as well as the specific platform (2) of present invention with pre-agreed naming convention.

Eventually, the network capacity API (5) will push (22) an alert for an off peak period of the telecommunication network or a WiFi connection will be available for the mobile communication device, so the assets downloading is triggered, from the specific platform to the device cache, through the service worker (3).

Then, the specific platform pushes (23) creative assets into the device cache (4), where the creative assets may include, according to different embodiments of the invention, video, images, software libraries or any other dynamic content.

The website will have an ad tag inserted within the code of said website where an ad is intended to be displayed. When the ad tag is downloaded by the user's browser during a visit on the publisher website, the tag gives instruction to the browser to retrieve the ad from the ad platform. This is called an ad request, which will be intercepted (24) by the service worker of present invention.

Once the server worker has intercepted the previous call, it will send (25) another ad request with information like time of the day, location, type of navigation, profile of the user or any other parameter that may have an impact on rendering a personalized ad, to the ad platform, which in response, sends back instructions to build a customized ad for the user. The instructions may be included in a JSON ("Java script object notation") file, but this is not a limitation and it is also possible to use, for example, XML or URL. In one embodiment of the invention, the instructions are transmitted as part of the response of the server. In that case, given that the structure of present invention comprises of an ad platform and it is followed a process of Real-time bidding (RTB), the response would be a winning bid. The instructions contain information about the group or segment to which the user belongs, so the assets to be used may be determined. In one embodiment of the invention, ads are customized at a group level, that is, the assets are associated to specific user groups within the specific platform.

The service worker, having already the instructions from the ad platform, fetches (26) the corresponding assets from the device cache and finally, the ad is rendered (27) offline.

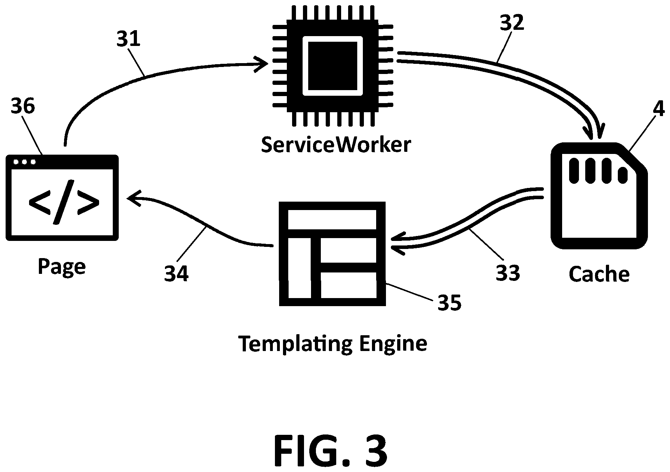

**Figure 3** also illustrates the process of rendering the specific ad from cached resources, according to one embodiment of present invention, where further details of web templating are provided. It is a simple scheme showing how the call made from the website (36) is intercepted (31) by the service worker (3). Then, the communication (32) between the service worker and the device cache (4) allows fetching the corresponding assets and providing (33) them to a templating engine (35). The templating engine uses, according to one embodiment of the invention, a template processor to combine ad templates, which may be HTML templates, to form customized ads using cached resources with no assets having to be downloaded over the network. Thus, a "dynamic" ad is rendered offline and inserted (34) on the website.

Therefore, present invention increases efficiency of the process as well as improves user experience on the mobile web as the impact on loading times is significant. Present invention is customer friendly, which ensures consumers only use their data plan and network resources for what they really want and not for advertising. Moreover, they will enjoy faster browsing speeds as all network and device processing resources can be dedicated to rendering the content they want.

In addition, ads are rendered offline, but they are still dynamic. Although most of the assets will already be pre-loaded, by requesting external information with a single request a personalized version of the content may be built, which is different each time and is adapted to the unique user and context.

One of the main applications of present invention is for serving mobile display advertising ranging from static banners to rich media and in-stream and out-stream video ads. However, there are many other present and future applications. For example, it is considered to eventually apply present invention for preloading editorial and non-advertising specific contents, ensuring customers have access to them when connectivity is weak or when mobile data plans are not to be impacted. The generation of dynamic and personalized contents from the preloaded resources could be built by leveraging on the same technology applied to advertising.

## Claims

1. Method for rendering a specific advertisement on a mobile communication device comprising the steps of:
a) providing a set of advertisement assets on a content delivery network, where the set of advertisement assets is available to be fetched by a service worker;
b) registering, installing and activating the service worker on a certain domain;
c) detecting, by the service worker, a WiFi connection available for the mobile communication device or an off peak period of the telecommunication network serving the mobile communication device;
d) downloading one or more assets, from the set of advertisement assets of the content delivery network, to the mobile communication device cache;
e) intercepting, by the service worker, an advertisement network request originated by a specific ad tag previously assembled in a domain website visited by a user of the mobile communication device;
f) sending one or more parameters comprising user navigation information from the service worker to an ad platform;
g) receiving, at the service worker, instructions from the ad platform to fetch specific assets to the user from the mobile device cache, based on the one or more parameters sent on previous step;
h) fetching, by the service worker, specific assets from those previously downloaded in the mobile device cache, based on the instructions provided by the ad platform;
i) offline rendering of the specific advertisement, based on the specific assets.

2. Method according to claim 1, further comprising classifying, by the content delivery network, advertisement assets provided by an advertiser into different groups of users.

3. Method according to claim 2, wherein providing the set of advertisement assets to a cache, further comprising selecting, by the content delivery network, advertisement assets classified in a group of users where the user of the mobile communication device belongs.

4. Method according to any one of previous claims, further comprising selecting the advertisement assets to be fetched for the user based on a context given by the one or more parameters comprising user navigation information.

5. Method according to any one of the previous claims, wherein detecting an off peak period of a telecommunication network serving the mobile device, further comprising enabling the service worker to detect off peak periods of the telecommunication network serving the mobile device through the usage of a network capacity application programming interface.

6. Method according to any one of the previous claims, wherein intercepting the advertisement network request of step e) comprises:
- visiting the domain website, by the user of the mobile communication device;
- downloading an ad tag inserted in the domain website, by a browser installed on the mobile communication device;
- in response to downloading the ad tag, the advertisement network request occurs;
- once the service worker is registered, installed and activated, intercepting the advertisement network request before being sent to an ad server

7. Method according to any one of the previous claims wherein the instructions provided by the ad platform are part of a response of a server following a decision process based on at least one of the following criteria: availability of reserved ad spaces or real time bidding process for the open ad market, being the response a winning bid.

8. Method according to any one of the previous claims, wherein rendering the specific advertisement comprises of templating the specific advertisement on a templating engine of the service worker, further comprising combining software libraries previously stored.

9. Method according to any one of the previous claims, wherein the navigation parameters of a user of the mobile communication device comprise at least one of time, location, type of navigation and profile of the user.

10. Method according to any one of the previous claims, wherein the set of advertising assets comprises at least one of video assets, image assets, software libraries and any other dynamic content.

11. Method according to any one of the previous claims, wherein the instructions are provided in a Javascript Object notation file.

12. System for rendering a specific advertisement comprising:
- a mobile communication device configured for browsing through the Internet and accessing to websites, having a cache configured for storing advertisement assets;
- a content delivery network configured for receiving advertisement assets provided by a publisher;
- a service worker configured for:
o detecting a WiFi connection available for the mobile communication device or an off peak period of a telecommunication network serving the mobile communication device;
∘ downloading one or more assets, from the set of advertisement assets of the content delivery network, to the mobile communication device cache;
∘ intercepting, an advertisement network request originated by a specific ad tag previously assembled in a website visited by a user of the mobile communication device ;
∘ subsequently sending one or more parameters comprising user navigation information to an ad platform;
∘ receiving instructions from the ad platform to fetch specific assets to the user from the mobile communication device cache;
∘ fetching specific assets from those previously downloaded in the mobile communication device cache, based on the instructions provided by the ad platform;
∘ offline rendering the specific advertisement, based on the specific assets;
- an ad platform configured for, in response to receiving the one or more parameters comprising user navigation information, sending instructions to the service worker, to render the specific advertisement, based on the parameters received.

13. System according to claim 12 further comprising a network capacity application programming interface configured for providing an alert to the service worker when detecting an off peak period of a telecommunication network serving the mobile communication device.

14. System according to any one of claims 12, 13, wherein the service worker further comprises a templating engine configured for combining previously stored templates to render the specific advertisement.

15. Computer program product comprising computer program code adapted to perform the method according to any of the claims 1-11 when said program code is executed on a computer, a digital signal processor, a field-programmable gate array, an application-specific integrated circuit, a micro-processor, a micro-controller, or any other form of programmable hardware.
